(19) Europäisches Patentamt
European Patent Office
Office européen des brevets

(11) EP 4 741 460 A1

(12) EUROPEAN PATENT APPLICATION
published in accordance with Art. 153(4) EPC

(43) Date of publication:
13.05.2026  Bulletin 2026/20

(51) International Patent Classification (IPC):
C08L 95/00 (2006.01)          C01B 32/205 (2017.01)
C08K 3/04 (2006.01)           C10C 3/02 (2006.01)

(21) Application number: 24839271.4

(52) Cooperative Patent Classification (CPC):
Y02E 60/10

(22) Date of filing: 23.04.2024

(86) International application number:
PCT/JP2024/015827

(87) International publication number:
WO 2025/013373 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  07.07.2023  JP 2023112251

(71) Applicant: Resonac Corporation
Tokyo 105-7325 (JP)

(72) Inventors:
• ISHIKAWA, Yutaro
Tokyo 105-7325 (JP)
• NISHI, Nobuhiro
Tokyo 105-7325 (JP)

(74) Representative: Strehl & Partner mbB
Maximilianstrasse 54
80538 München (DE)

(54) **BINDER PITCH FOR PRODUCING CARBON MATERIAL AND METHOD FOR PRODUCING CARBON MATERIAL**

(57)    A method for producing a carbon material using pitch having a softening point of 70°C to 120°C, a fixed carbon content of 50.0% by mass or more, a quinoline insoluble matter of 18.0% by mass or less, an initial boiling point of 320°C or more, and a Casson yield value at the softening point +100°C of 0.18 Pa or more, as a binder pitch.

Fig. 4

$$\sqrt{S} = 0.276\sqrt{D} + 0.492$$

SHEAR STRESS $(S)^{1/2}$ / $Pa^{1/2}$ vs SHEAR RATE $(D)^{1/2}$ / $sec^{-1/2}$

EP 4 741 460 A1

**Description**

TECHNICAL FIELD

The present disclosure relates to a method for producing carbon materials, such as a graphite electrode, and binder pitch.

BACKGROUND

Carbon materials, such as a graphite electrode used in an electric furnace for remelting iron are produced by kneading and forming aggregates, such as coke, and pitch (referred to as "binder pitch") at a temperature equal to or higher than the softening point of the binder pitch, followed by baking, and then graphitizing. Since it is necessary that the carbon material have properties such as high mechanical strength, high electrical conductivity, and high thermal conductivity, the carbon material preferably has high density. However, the baked body has a structure having a large number of pores due to volatilization of low-molecular-weight components in the binder pitch during the baking step, etc. Therefore, in the production process, impregnating the baked body with pitch (referred to as "impregnation pitch") followed by re-baking several times reduces the porosity and results in the obtained carbon material having high density.

The coking value of the binder pitch in the formed body in the baking step is referred to as a carbon yield. The higher the carbon yield, the more the density of the obtained baked body, which is preferable, since the number of subsequent impregnations with the impregnation pitch and re-baking can be reduced. In general, the higher the fixed carbon content of the pitch, the higher the carbon yield. Therefore, it is preferable to use such pitch as a binder pitch.

As a method of increasing the fixed carbon content of the binder pitch, a method of removing light components in the pitch by distillation, etc., is known, but at the same time, the softening point also increases. In general, when kneading aggregates, such as coke, and a binder pitch, a temperature higher than the softening point by about 50°C or more is required. Therefore, when the softening point is high, there is a problem that the equipment load becomes large.

In order to solve this problem, there is a method of adding a cutback oil to pitch having a high fixed carbon content and a high softening point (Patent Literature 1).

[Citation List]

[Patent Literature]

[PTL 1] US 6352637 B2

SUMMARY OF INVENTION

[Technical Problem]

The method described in Patent Literature 1 has a problem that the initial boiling point of the obtained pitch is lowered, since it is necessary to add a cut-back oil having a relatively low boiling point. When the initial boiling point is too low, there is a problem that the amount of light components volatilized during kneading is large, so that the viscosity increases during kneading, and the kneadability is lowered. As described above, it is difficult to achieve both favorable kneadability and a high carbon yield only from the viewpoint of the fixed carbon content and the softening point, which have been considered important so far. The present disclosure provides a binder pitch capable of achieving both favorable kneadability and a high carbon yield, and a method for producing a high density carbon material using the binder pitch.

[Solution to Problem]

When a formed body is baked, softening and a decrease in viscosity of the binder pitch in the formed body occur with an increase in temperature. At this time, when the outflow of the binder pitch from the formed body occurs, the carbon yield decreases. In order to suppress the outflow of the binder pitch during baking, it is considered effective to use pitch capable of maintaining a relatively high viscosity even during baking. However, such pitch generally has a high softening point, and therefore has a problem of lowering the kneadability. The present inventors considered that, in order to suppress the outflow of the binder pitch during baking without lowering the kneadability, a binder pitch, whose viscosity tends to decrease in a state in which the binder pitch flows to some extent, such as during kneading, and which maintains a high viscosity in a state in which the binder pitch hardly flows, such as during baking, is preferable. Based on this consideration, the present inventors have combined a new viewpoint of rheological properties of the binder pitch with the characteristics that have been conventionally considered important, such as the fixed carbon content and the softening point of the binder pitch, and conducted intensive studies. As a result, the present inventors have found that a higher carbon yield can be obtained and a higher density carbon material can be obtained, when pitch having a similar fixed carbon content but a higher Casson yield value is used as the binder pitch, thereby completing the present invention.

That is, the contents of the present disclosure relate to the following [1] to [4].

[1] A binder pitch for producing a carbon material, wherein the binder pitch has a softening point of 70°C to 120°C, a fixed carbon content of 50.0% by mass or more, a quinoline insoluble matter of 18.0% by mass or less, an initial boiling point of 320°C or more, and a Casson yield value at the softening point +100°C of 0.18 Pa or more.

[2] The binder pitch for producing a carbon material according to [1], wherein the carbon material is a graphite electrode.

[3] A method for producing a carbon material using pitch having a softening point of 70°C to 120°C, a fixed carbon content of 50.0% by mass or more, a quinoline insoluble matter of 18.0% by mass or less, an initial boiling point of 320°C or more, and a Casson yield value at the softening point +100°C of 0.18 Pa or more, as a binder pitch.

[4] The method for producing a carbon material according to [3], wherein the carbon material is a graphite electrode.

[Advantageous Effects of Invention]

According to the present disclosure, a binder pitch capable of achieving both favorable kneadability and a high carbon yield can be obtained. According to the present disclosure, a high density carbon material can be obtained.

BRIEF DESCRIPTION OF DRAWINGS

FIG. 1 is a flow chart showing a petrochemical process for thermal cracking of naphtha, etc., and a method for producing ethylene bottom oil.

FIG. 2 is a diagram showing the change with time in the viscosity increase rate at 170°C of various pastes (kneaded product of needle coke and various binder pitches, needle coke:binder pitch = 3:7 (mass ratio)).

FIG. 3 is a diagram showing the viscosity change of the binder pitch of Example 1 when changing the shear rate at the softening point + 100°C (193°C).

FIG. 4 is a Casson plotting (measurement temperature: 193°C) of the binder pitch of Example 1.

DESCRIPTION OF EMBODIMENTS

Hereinafter, preferred embodiments of the present invention will be described, but it should be understood that the present invention is not limited to these embodiments only, and various applications can be made within the spirit and practice of the present invention.

In the present specification, when using "to" for a numerical range, the numerical values at both ends are the upper limit value and the lower limit value, respectively, and are included in the numerical range.

<Binder pitch>

The binder pitch of one embodiment has a softening point of 70°C to 120°C, a fixed carbon content of 50.0% by mass or more, a quinoline insoluble matter of 18.0% by mass or less, an initial boiling point of 320°C or more, and a Casson yield value at the softening point +100°C of 0.18 Pa or more. The softening point, fixed carbon content, quinoline insoluble matter, initial boiling point, and Casson yield value are determined by the methods described in the Examples section.

The softening point of the binder pitch of one embodiment is 70°C or more, preferably 80°C or more, and more preferably 85°C or more. The softening point of the binder pitch of one embodiment is 120°C or less, preferably 110°C or less, and more preferably 100°C or less. The upper limit values and the lower limit values can be arbitrarily combined. When the softening point is within the above-described temperature ranges, the binder pitch sufficiently softens at a kneading temperature (for example, 130°C to 170°C) and favorable kneadability is obtained, which is preferable.

The higher the fixed carbon content, the higher the carbon yield, and the higher the density of the resulting carbon material. The fixed carbon content of the binder pitch of one embodiment is 50.0% by mass or more, and more preferably 51.0% by mass or more. The upper limit of the fixed carbon content is not particularly limited, but is, for example, 75.0% by mass or 85.0% by mass.

The quinoline insoluble matter (QI) of the binder pitch of one embodiment is 18.0% by mass or less, preferably 15.0% by mass or less, and more preferably 10.0% by mass or less. The quinoline insoluble matter of the binder pitch includes carbon powder added to the base pitch in addition to the quinoline insoluble matter contained in the base pitch. The carbon powder can be added, for example, in step 3 described later. Preferably, components detected as the quinoline insoluble matter (QI) are substantially free of mesophase spherulites, which may be generated during a heat treatment of petroleum-based heavy oils. The lower limit of the quinoline insoluble matter is not particularly limited as long as the Casson yield value at the softening point of the binder pitch +100°C is 0.18 Pa or more, but is, for example, 1.0% by mass or 1.5% by mass.

The initial boiling point of the binder pitch of one embodiment is 320°C or more, and preferably 340°C or more. When the initial boiling point is 320°C or more, the amount of light components volatilized at a kneading temperature (for example, 130°C to 170°C) is small, so that the viscosity of the pitch during kneading hardly increases, and kneading can be carried out well. The upper limit of the initial boiling point is not particularly limited as long as the softening point of the binder pitch is in the range of 70°C to 120°C, but is, for example, 400°C or 450°C.

In one embodiment, the Casson yield value at the softening point of the binder pitch +100°C is 0.18 Pa or more, more preferably 0.20 Pa or more, and still more preferably 0.22 Pa or more. "At the softening point of the binder pitch +100°C" means that when the softening point of the binder pitch is, for example, 93°C, the temperature at which the yield value is measured is set to 193°C. When the Casson yield value at the softening point +100°C is 0.18 Pa or more, the outflow of the binder pitch from the formed body, which may occur during baking, is suppressed, and the carbon yield tends to increase, which is preferable. The upper limit of the Casson yield value at the softening point +100°C is not particularly limited, but is, for example, 1.5 Pa or 1.0 Pa.

The Casson yield value can be calculated by applying Casson equation (1) to a graph obtained by measuring the relationship between the shear rate and the shear stress at the measured temperature according to the method described in ASTM D5018-18 and plotting both the measured values, and plotting the measured values. That is, the Casson yield value is calculated as a value obtained by squaring the y-intercept ($\tau_0^{1/2}$) of the graph of $S^{1/2}$ versus $D^{1/2}$ of Casson equation (1), wherein S is shear stress (Pa), D is shear rate (s$^{-1}$), $\tau_0$ is Casson yield value (Pa), and $\mu_0$ is Casson viscosity (Pa·s).

$$S^{1/2} = \tau_0^{1/2} + \mu_0^{1/2} \cdot D^{1/2} \qquad (1)$$

<Method for producing binder pitch for producing carbon material>

The method for producing a binder pitch for producing a carbon material is not particularly limited as long as it is a method for obtaining a binder pitch satisfying a predetermined physical property values, and examples thereof include the following production methods. In one embodiment, the method for producing a binder pitch for producing a carbon material comprises at least the following steps 1 to 3 in this order, and may comprise other steps.

Step 1 (heat treatment step): heat-treating a petroleum-based heavy oil
Step 2 (distillation step): distilling the heat-treated product obtained in step 1 to obtain a base pitch having a softening point of 60°C to 110°C, a fixed carbon content of 49.0% by mass or more, an initial boiling point of 320°C or more, and a quinoline insoluble matter (QI) of 1.0% by mass or less as a high boiling point component
Step 3 (carbon powder mixing step): adding carbon powder to the base pitch obtained in step 2 and mixing them to obtain a binder pitch

The petroleum-based heavy oil used as a raw material is not particularly limited as long as it can provide a base pitch having desired characteristics in step 2, but preferably has the following composition. That is, the content of a fraction having a boiling point of less than 150°C in the petroleum-based heavy oil is preferably 5% by mass or less, more preferably 2% by mass or less, and still more preferably 1% by mass or less. The content of a fraction having a boiling point of 150°C or more and less than 450°C in the petroleum-based heavy oil is preferably 75% by mass or more, more preferably 85% by mass or more, and still more preferably 90% by mass or more. The content of a fraction having a boiling point of 450°C or more and less than 550°C in the petroleum-based heavy oil is preferably 15% by mass or less, more preferably 10% by mass or less, and still more preferably 8% by mass or less. The content of a fraction having a boiling point of 550°C or more in the petroleum-based heavy oil is preferably 5% by mass or less, more preferably 3% by mass or less, and still more preferably 1% by mass or less. The content of a fraction in each temperature range refers to a percent recovered in each temperature range when a distillation curve of the petroleum-based heavy oil is determined. The distillation curve can be determined by selecting a suitable calculation method from JIS K 2254:2018, ASTM D7500-15 and ASTM D7169-16 according to the type of the petroleum-based heavy oil, and carrying out a measurement.

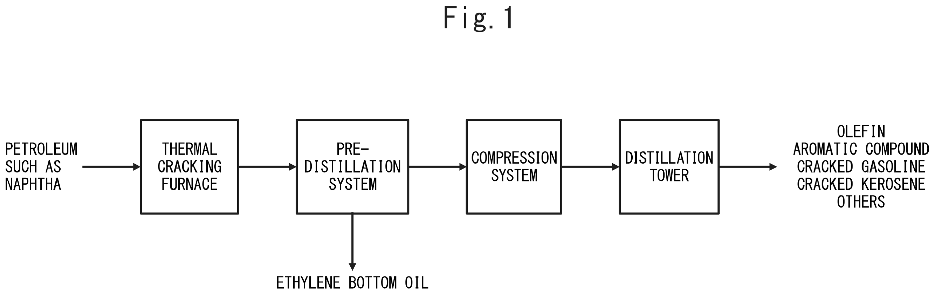

Examples of the petroleum-based heavy oil having the aforementioned composition include an ethylene bottom oil light fraction. In the petrochemical industry, in general, naphtha and the like are thermally cracked at a high temperature, and the obtained thermally cracked product is distilled and separated into fractions of ethylene, propylene, and other olefins; aromatic compounds, such as benzene, toluene, and xylene; cracked gasoline, cracked kerosene, etc., to obtain products. Among these fractions, a heavy fraction having the highest boiling point is referred to as ethylene bottom oil, which is used in a raw material of carbon black, etc., and as a fuel (see FIG. 1). Since a thermal cracking plant for naphtha and the like is often referred to as an ethylene plant, the aforementioned heavy fraction is referred to as ethylene bottom oil.

Although the properties of ethylene bottom oil obtained by thermal cracking of naphtha-containing raw materials depend on the type of naphtha-containing raw material, thermal cracking conditions, operating conditions of the refining distillation tower, etc., the general properties are that the 50% distillation temperature is 200°C to 400°C, the aromatic carbon content is 50% by mass or more, the flash point is 70°C to 100°C, and the 50°C kinematic viscosity is less than 40 mm$^2$/s. However, since the ethylene bottom oil is a mixture of hydrocarbons, the above values may vary to some extent.

The ethylene bottom oil light fraction refers to a distillate obtained by distilling off an arbitrary ratio (for example, 5% by mass to 70% by mass) of light components from ethylene bottom oil by a distillation operation, etc. The high boiling point component obtained at this time is referred to as an ethylene bottom oil heavy fraction. Ethylene bottom oil, an ethylene bottom oil heavy fraction, or other heavy oil may be added to the ethylene bottom oil light fraction as long as it falls within the above preferable composition. Examples of other heavy oil include, but are not limited to, fluidized catalytic cracking oil (FCC decant oil), normal pressure distillation residue oil, vacuum distillation residue oil, hydrotreated petroleum-based heavy oil, cracked kerosene, and coal tar. The sulfur content and nitrogen content of the pitch are preferably as small as possible because they cause puffing during baking. When a graphite electrode is produced using pitch containing a large amount of metal components, these metal components evaporate during graphitization, reducing the density of the graphite electrode, which may be undesirable in terms of product quality. From these points of view, other heavy oil is preferably low in sulfur content, nitrogen content, and metal component. Fluid catalytic cracking oil (FCC decant oil) and cracked kerosene are preferable as such other heavy oil. Although the properties of fluidized catalytic cracking oil (FCC decant oil) depend on the raw materials and operating conditions, the general properties are that the 50% distillation temperature is 300°C to 450°C, the flash point is 60°C to 160°C, and the 40°C kinematic viscosity is less than 40 mm$^2$/s at 40°C. However, since fluid catalytic cracking oil (FCC decant oil) is a complex mixture, the above values may vary to some extent. In one embodiment, the petroleum-based heavy oil is an ethylene bottom oil light fraction.

Cracked kerosene is a mixture composed mainly of hydrocarbons having 9 or more carbon atoms and produced in petrochemical processes, and is a fraction having a boiling point in the range of 90°C to 230°C at 1 atm. However, since cracked kerosene is a mixture of hydrocarbons, the number of carbon atoms and boiling point may vary to some extent.

Examples of primary components of cracked kerosene include xylene, styrene, allylbenzene, propylbenzene, methylethylbenzene, trimethylbenzene, methylstyrene, dicyclopentadiene, indane, indene, methylpropylbenzene, methylpropenylbenzene, ethylstyrene, divinylbenzene, methylindene, naphthalene, and methyldicyclopentadiene.

(Step 1: Heat treatment step)

Step 1 is a step of heat-treating a petroleum-based heavy oil. The heat treatment is preferably carried out under a non-oxidizing gas atmosphere in a sealed vessel. Examples of the non-oxidizing gas include nitrogen gas, argon, hydrogen gas, lower alkanes, such as methane and ethane, and a mixed gas of these non-oxidizing gases. Nitrogen gas is preferable from the viewpoint of cost and ease of handling.

The heat treatment temperature is preferably 380°C or more, more preferably 400°C or more, and still more preferably 410°C or more. The heat treatment temperature is preferably 500°C or less, more preferably 480°C or less, and still more preferably 450°C or less. The upper limit values and the lower limit values can be arbitrarily combined. The preferable range is 380°C to 500°C, more preferably 400°C to 480°C, and still more preferably 410°C to 450°C.

Appropriate heat treatment time depends on the heat treatment temperature. When the heat treatment temperature is 380°C to 400°C, it is preferably 8 hours to 48 hours, and more preferably 16 to 48 hours, from the time when the predetermined heat treatment temperature is reached (the same applies hereinafter). When the heat treatment temperature is more than 400°C and 430°C or less, it is preferably 1 hour to 24 hours, and more preferably 3 hours to 16 hours. When the heat treatment temperature is more than 430°C and 500°C or less, it is preferably 0.1 hours to 16 hours, and more preferably 0.5 hours to 8 hours. The upper limit values and the lower limit values of the appropriate heat treatment time in each heat treatment temperature condition can be arbitrarily combined.

The pressure at the beginning of the heat treatment (initial pressure) is preferably 0 MPaG, but is not particularly limited. The pressure in the sealed vessel is increased by hydrogen, and lower alkanes, such as methane and ethane, generated by thermal decomposition during the heat treatment. There is no limitation on the pressure inside the sealed vessel, which may be reduced as necessary. However, the heat treatment is preferably carried out under pressure since yield of the base pitch obtained in step 2 tends to increase. When the heat treatment is carried out under pressure, the pressure range is preferably, for example, about 0.1 MPaG to 15 MPaG.

As described in JP S60-179493 A and JP S60-240790 A, a solid catalyst and the like may be added during the heat treatment, but in this case, it is necessary to add a step of removing the solid catalyst before step 3.

(Step 2: Distillation step)

Step 2 is a step of removing low boiling point components by distilling the heat-treated product obtained in step 1 to obtain pitch (base pitch) having desired characteristics as a high boiling point component. The distillation method in step 2 may be any of atmospheric distillation, reduced-pressure distillation (vacuum distillation), or a combination of atmospheric distillation and reduced-pressure distillation, and can be appropriately selected. It is preferable that the internal temperature of a distillation apparatus does not exceed 360°C. This is because, when the temperature exceeds 360°C, a reaction, such as polymerization is more likely to occur and coking may occur on the inner wall of the distillation apparatus. The lower limit temperature does not affect the properties of the pitch, but is preferably 200°C or more in terms of economic efficiency, since, when the temperature is low, the distillation pressure must be reduced in order to distill off low boiling point components. When carrying out reduced-pressure distillation (vacuum distillation), the pressure during distillation is preferably 100 PaA to 10,000 PaA, more preferably 500 PaA to 3,000 PaA, and still more preferably 800 PaA to 2,000 PaA in order to obtain a base pitch having an initial boiling point of 320°C or more. In general, the higher the distillation end point, the higher the initial boiling point. In order to set the initial boiling point of the obtained base pitch to 320°C or more, the distillation end point in terms of normal pressure is preferably 320°C or more, and more preferably 330°C or more, although it depends on the type of petroleum-based heavy oil used, the heat treatment conditions in step 1, and the distillation conditions in step 2, etc.

The softening point of the base pitch obtained in step 2 of one embodiment is preferably 60°C or more, and more preferably 65°C or more. The softening point of the base pitch obtained in step 2 of one embodiment is preferably 110°C or less, and more preferably 100°C or less. The upper limit values and the lower limit values can be arbitrarily combined. The preferable range is 60°C to 110°C, and more preferably 65°C to 100°C. When the softening point is 60°C to 110°C, the softening point of the obtained binder pitch is 70°C to 120°C, which is preferable, although it depends on the type and amount of the carbon powder, which is added and mixed in step 3. The softening point is determined by the method described in the Examples section.

The fixed carbon content of the base pitch obtained in step 2 of one embodiment is preferably 49.0% by mass or more, and more preferably 50.0% by mass or more. When the fixed carbon content is 49.0 mass% or more, the fixed carbon content of the obtained binder pitch is 50.0% by mass or more, which is preferable, although it depends on the type and amount of the carbon powder, which is added and mixed in step 3. The upper limit of the fixed carbon amount is not particularly limited, but is, for example, 75.0% by mass or 85.0% by mass. The fixed carbon content is determined by the method described in the Example section.

The initial boiling point of the base pitch of one embodiment is preferably 320°C or more, and more preferably 330°C or more. When the initial boiling point of the base pitch is 320°C or more, the initial boiling point of the obtained binder pitch is also 320°C or more, which is preferable, although it depends on the conditions of step 3. The upper limit of the initial boiling point of the base pitch of one embodiment is not particularly limited as long as the softening point of the obtained base pitch is 60°C to 110°C, but is preferably 450°C or less, and more preferably 400°C or less. The upper limit values and the lower limit values can be arbitrarily combined. The preferable range is 320 to 450°C, and more preferably 330 to 400°C. The initial boiling point is determined by the method described in the Examples section

Since the quinoline insoluble matter (QI) (mesophase spherulites) generated by the heat treatment of petroleum-based heavy oil causes a decrease in kneadability (Light Metals 2006,535-540.), the quinoline insoluble matter (QI) of the base pitch of one embodiment is preferably 1.0% by mass or less, more preferably 0.5% by mass or less, and still more preferably 0.1% by mass or less. The lower limit of QI of the base pitch is not particularly limited, but is, for example, 0.0% by mass or 0.001% by mass. The QI is determined by the methods described in the Examples section.

(Step 3: Carbon powder mixing step)

Step 3 is a step of adding carbon powder to the base pitch obtained in step 2 and mixing them. The carbon powder used is not particularly limited as long as it improves the Casson yield value of the obtained binder pitch without deteriorating the kneadability of the obtained binder pitch. For example, carbon powder having a particle diameter of about 1 nm to 20 μm can be used. As to the above particle diameter range, the particle diameter of particles having a particle diameter of 10 nm or more means an average particle diameter (median diameter: D50) measured by the laser diffraction/scattering method, and the particle diameter of particles having a particle diameter of less than 10 nm means an arithmetic average diameter determined by the electron microscope observation. Such carbon powder includes, for example, graphite powder, such as artificial graphite powder, and natural graphite powder; coke powder, and free carbon powder (primary QI) in coal tar, and artificial graphite powder and coke powder are preferable. Carbon powder by-produced in the production of a graphite electrode can also be used. The carbon powder can be used alone or as a mixture of two or more thereof. In one embodiment, the carbon powder is artificial graphite powder.

The amount of carbon powder added is preferably 1.0 parts by mass or more, more preferably 3.0 parts by mass or more, and still more preferably 5.0 parts by mass or more, with respect to 100 parts by mass of the base pitch. The amount of carbon powder added is preferably 22.0 parts by mass or less, more preferably 18.0 parts by mass or less, and still more preferably 11.0 parts by mass or less, with respect to 100 parts by mass of the base pitch. The upper limit values and the lower limit values can be arbitrarily combined. The preferable range is 1.0 parts by mass or more and 22.0 parts by mass or less, more preferably 3.0 parts by mass or more and 18.0 parts by mass or less, and still more preferably 5.0 parts by mass or more and 11.0 parts by mass or less, with respect to 100 parts by mass of the base pitch. When it is within the above ranges, the obtained binder pitch has a quinoline insoluble matter of 18.0% by mass or less, although it depends on the amount of quinoline insoluble matter in the base pitch. Thus, the carbon yield can be improved, since the Casson yield value can be improved without deteriorating the kneadability.

The method of mixing the base pitch and the carbon powder is not particularly limited, but a method in which the carbon powder is well dispersed in the base pitch is preferable.

Examples thereof include a method of mixing the base pitch and the carbon powder at a temperature equal to or higher than the softening point of the base pitch. When the base pitch and the carbon powder are mixed at a temperature equal to or higher than the softening point of the base pitch, the mixing temperature is preferably 350°C or less, more preferably 250°C or less, and still more preferably 200°C or less. When the temperature is 350°C or less, it is possible to minimize the deterioration of the base pitch, which may occur during mixing, although it depends on the mixing conditions, etc. The mixing time is not particularly limited, but is, for example, 5 minutes to 24 hours. When it is within the above range, it is possible to disperse the carbon powder well in the base pitch, although it depends on the mixing conditions, etc. The mixing atmosphere is not particularly limited, and mixing can be carried out under air or under a non-oxidizing gas atmosphere. Mixing is preferably carried out under a non-oxidizing gas atmosphere from the viewpoint of minimizing the deterioration of the base pitch, which may occur during mixing. Examples of the non-oxidizing gas include nitrogen gas, argon, hydrogen gas, lower alkane gas, such as methane and ethane, and a mixed gas of these non-oxidizing gases. Among them, nitrogen gas is preferable from the viewpoint of cost and ease of handling. The mixing apparatus is not particularly limited, and for example, a heatable mixer, kneader, etc., can be used.

Examples of other mixing methods include a method in which the base pitch is dissolved in a suitable solvent and mixed with carbon powder. In this case, a step of removing the solvent by reduced-pressure distillation, etc., after mixing is necessary. Suitable solvents are not particularly limited as long as it can dissolve the base pitch well, and benzene, toluene, xylene, quinoline, pyridine, and mixtures thereof are preferable. Benzene and toluene rich fractions obtained in petrochemical processes can also be utilized. Such fractions include, for example, cracked gasoline and cracked kerosene.

Cracked gasoline is a mixture composed mainly of hydrocarbons having 6 to 8 carbon atoms and produced in petrochemical processes, and is a fraction having a boiling point in the range of 65°C to 150°C at 1 atm. However, since cracked gasoline is a mixture of hydrocarbons, the number of carbon atoms and boiling point may vary to some extent.

Examples of primary components of cracked gasoline include benzene, toluene, ethylbenzene, xylene, styrene and hexane.

Cracked kerosene is as described above.

The mixing using a solvent can be carried out at room temperature or under heating conditions. When mixing is carried out at normal pressure, mixing is preferably carried out at or below the boiling point of the solvent used. When mixing is carried out at a temperature higher than or equal to the boiling point of the solvent used, mixing can be carried out under reflux conditions or under pressure using a sealed vessel. The mixing temperature is preferably 350°C or less, more preferably 250°C or less, and still more preferably 200°C or less, although it depends on the mixing conditions, etc. When the temperature is 350°C or less, it is possible to minimize the deterioration of the base pitch, which may occur during mixing, although it depends on the mixing conditions, etc. The mixing time is not particularly limited, but is, for example, 5 minutes to 24 hours. When it is within the above range, it is possible to disperse the carbon powder well in the base pitch, although it depends on the mixing conditions, etc. The mixing atmosphere is not particularly limited, and mixing can be carried out under air or under a non-oxidizing gas atmosphere. Mixing is preferably carried out under a non-oxidizing gas atmosphere from the viewpoint of minimizing the deterioration of the base pitch, which may occur during mixing. Examples of the non-oxidizing gas include nitrogen gas, argon, hydrogen gas, lower alkanes, such as methane and ethane, and a mixed gas of these non-oxidizing gases Among them, nitrogen gas is preferable from the viewpoint of cost and ease of handling.

When the base pitch and the carbon powder are mixed using a solvent, a solvent removal step is required after step 3. The method of removing the solvent is not particularly limited, but a method capable of efficiently removing the solvent without deteriorating the base pitch is preferable. Such a solvent removal method includes, for example, distillation. The distillation method in this case may be any of atmospheric distillation, reduced-pressure distillation (vacuum distillation), or a combination of atmospheric distillation and reduced-pressure distillation, and can be appropriately selected. It is preferable that the internal temperature of a distillation apparatus not exceed 360°C. This is because, when the temperature exceeds 360°C, a reaction, such as polymerization is more likely to occur and deterioration of the base pitch may occur. Since the lower limit temperature and the pressure in the case of carrying out reduced-pressure distillation (vacuum distillation) do not affect the physical properties of the base pitch, the conditions can be appropriately selected depending on the type of the solvent used.

<Method for producing carbon material>

In the method for producing a carbon material according to one embodiment, pitch having a softening point of 70°C to 120°C, a fixed carbon content of 50.0% by mass or more, a quinoline insoluble matter of 18.0% by mass or less, an initial boiling point of 320°C or more, and a Casson yield value at the softening point +100°C of 0.18 Pa or more is used as the binder pitch. The carbon materials refer to various types of formed carbon materials, such as graphitic tubes, graphitic crucibles, graphitic boats, and graphite electrodes. Hereinafter, an exemplary manufacturing process of a carbon material, such as a graphite electrode will be described.

1. Kneading step

A step of mixing needle coke and a binder pitch together and kneading them

2. Forming step

A step of forming the kneaded product to obtain a formed product having a predetermined size and shape

3. Baking step

A step of baking the formed body to obtain a baked body

4. Impregnation step

A step of filling the baked body with an impregnation pitch

5. Re-baking step

A step of re-baking the baked body filled with the impregnation pitch to obtain a re-baked body

6. Graphitization step

A step of graphitizing the re-baked body to obtain a graphitized body

7. Processing step

A step of forming the graphitized body into a predetermined shape by cutting or the like to form a carbon material, such as a graphite electrode

1. Kneading step

Needle coke, which is pulverized, classified, and blended in a predetermined grain ratio, and a binder pitch are mixed together and kneaded. The blending amount of the binder pitch varies, depending on the kneading method and the forming method, but is generally about 20 parts by mass to 30 parts by mass with respect to 100 parts by mass of the needle coke.
The kneaded product may include a puffing inhibitor, such as iron oxide.
A commercially available mixing apparatus or kneading apparatus can be used for mixing and kneading. Specific examples thereof include a mixing apparatus and a kneading apparatus, such as a mixer and a kneader. The kneading temperature varies, depending on the binder pitch used, but is generally about 130°C to 170°C. After kneading, the kneaded product is cooled to a temperature suitable for subsequent forming (e.g., 100°C to 130°C).
In this step, as the binder pitch, pitch having a softening point of 70°C to 120°C, a fixed carbon content of 50.0% by mass or more, a quinoline insoluble matter of 18.0% by mass or less, an initial boiling point of 320°C or more, and a Casson yield value at the softening point +100°C of 0.18 Pa or more is used. The details of the pitch are as described above.

2. Forming step

The kneaded product is formed to obtain a formed product having a predetermined size and shape. The forming method can be appropriately selected from extrusion, molding, etc., depending on the target carbon material. When the target carbon material is a graphite electrode, extrusion into a cylindrical shape is common.

3. Baking step

The formed body of the previous step is heated and baked at 700°C to 1000°C to obtain a baked body. The baking step is preferably carried out in a combustion exhaust gas non-oxidizing atmosphere. The formed body softens at the initial stage of a temperature rise, a large amount of decomposition gas is generated by thermal decomposition and polycondensation of the binder pitch at 200°C to 500°C, and the formation of pores and volume shrinkage occur. The binder pitch carbonizes at 500°C to 600°C. The baking step often requires about one month, including cooling.

4. Impregnation step

In the baking step, the binder pitch generally loses 35% to 45% of its mass as a volatile matter. At this time, a large number of pores are generated in the baked body. The impregnation step is to fill the pores with the impregnation pitch. The impregnation is carried out, for example, by placing the baked body in an autoclave, degassing under reduced pressure, injecting a molten impregnation pitch, and injecting the impregnation pitch into the pores at a gas pressure of around 1 MPa at about 200°C.

The softening point of the impregnation pitch used varies, depending on the type of carbon material to be produced, producing method, etc., but is preferably 80°C to 120°C. The fixed carbon content is preferably 45.0% by mass or more, and more preferably 50.0% by mass or more.

5. Re-baking step

The baked body filled with the impregnation pitch is re-baked to obtain a re-baked body. The re-baking can also be carried out under the same conditions as in the baking step. The impregnation step and the re-baking step may be repeated, if necessary.

6. Graphitization step

The re-baked body is placed in a furnace surrounded by an insulating material (Acheson furnace, LWG furnace, etc.), and subjected to a heat treatment by resistance heat generation of packing coke or the re-baked body by energization. The temperature of graphitization is 2000°C to 3000°C. This temperature is necessary to convert amorphous carbon in the re-baked body into crystalline graphite. In order to convert the re-baked body into graphitized body, the heat treatment is preferably carried out for several days.

7. Processing step

The graphitized body is formed into a carbon material having a predetermined shape, for example, a graphite electrode product, by machining, such as cutting. The density (bulk density) of the graphite electrode varies, depending on the electric furnace installation used and the operating conditions of the electric furnace, but preferably is 1.5 g/cm$^3$ to 1.9 g/cm$^3$.

EXAMPLES

The present invention will be further described with reference to Examples, and Comparative Examples below, but these Examples merely illustrate examples of the present invention, and the present invention is not limited to these Examples.

<Method for measuring softening point (SP)>

The softening point was measured in accordance with JIS K 2425:2006 "8. Measuring method for softening point of tar pitch (ring and ball method)" of the "Test method of creosote oil, prepared tar and tar pitch".

<Method for measuring fixed carbon content>

Fixed carbon content was measured in accordance with JIS K 2425:2006 "11. Method of determination of fixed carbon content" of the "Test method of creosote oil, prepared tar and tar pitch".

<Method for measuring quinoline insoluble matter (QI)>

Quinoline insoluble matter (QI) was measured in accordance with the filtration method described in JIS K 2425:2006 "15. Method of determination of quinoline-insoluble content in tar pitch" of the "Test method of creosote oil, prepared tar and tar pitch".

<Method for measuring initial boiling point>

The initial boiling point of the pitch was measured in accordance with "6. Reduced-pressure method" described in JIS K 2254:2018 "Petroleum products-Determination of distillation characteristics".

<Method for measuring Casson yield value>

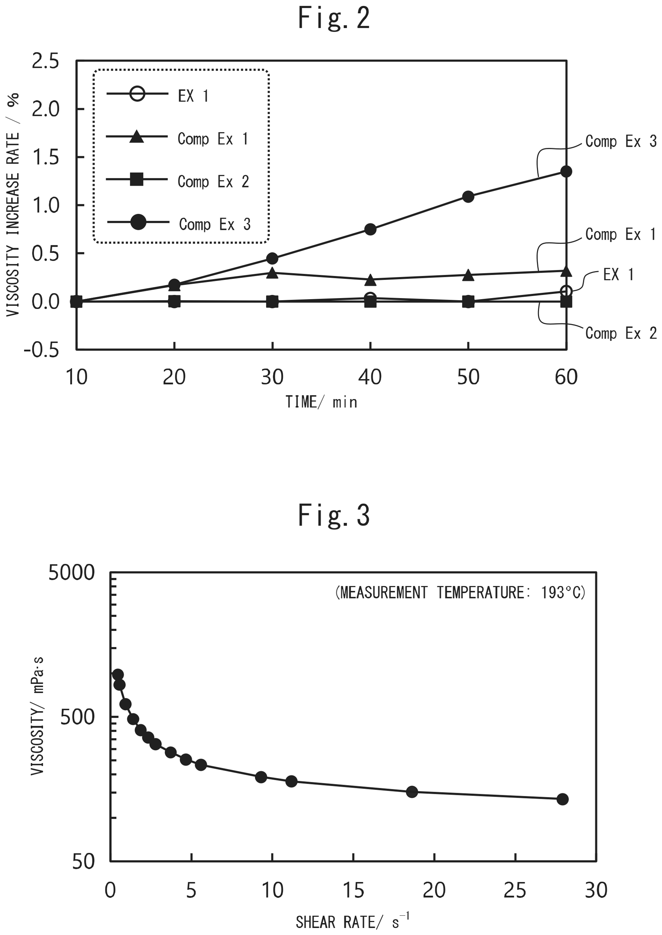

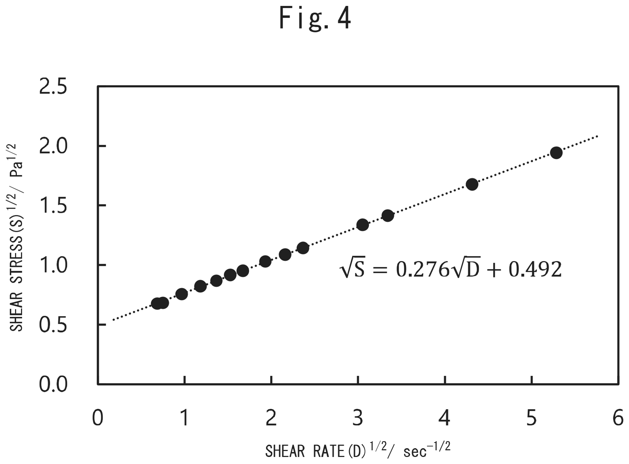

The relationship between the shear rate and the shear stress at each temperature was measured in accordance with the method described in ASTM D5018-18. The measurement was carried out with changing the shear rate so that the torque was in the range of 10% to 90%, and the viscosity at each shear rate was recorded. As an example of the measurement result, the measurement result of Example 1 is shown in FIG. 3. The yield value was calculated based on the measured date using Casson equation (1). FIG. 4 shows a Casson plotting of Example 1 as an example of calculating the yield value. The apparatus used for the measurement is as follows.

Rotary viscometer (Brookfield Corporation, DV-II +Pro)
Thermosel (Brookfield Corporation, HT-110115 ADP)
Spindle (Brookfield Corporation, SC4-21)
Chamber (Brookfield Corporation, HT-2DB-100)

<Method for measuring true density of pitch>

The true density of the pitch was measured by the constant volume expansion method using AccuPyc II 1340 (Micromeritics Instrument Corporation). The measurement was carried out at 25°C using helium as the displacement gas.

<Electrode evaluation>

A binder pitch and needle coke were mixed (needle coke:binder pitch = 8:2, mass ratio) using a laboratory kneader (Toshin Co., Ltd., TDR200-3 type), and formed into a shape of an electrode piece (cylindrical; 50 mmΦ × 35 mm) by molding to prepare a formed body. The formed body was baked at about 1000°C to produce a baked body. The density of the formed body and the baked body was measured in accordance with JIS R 7222:2017 "Test methods for physical properties of graphite materials 7. Measuring method for bulk density". The carbon yield was calculated using formula (2).

$$\text{Carbon yield (\%)} = \frac{W_3 - W_2}{W_1} \times 100 \qquad (2)$$

$W_1$: mass of binder pitch used for preparing formed body
$W_2$: mass of needle coke used for preparing formed body
$W_3$: mass of baked body

<Carbon powder>

As the artificial graphite powder, artificial graphite fine powder (UF-G5) (Resonac Corporation, particle diameter: 3 μm) was used. As the carbon black powder, carbon black (MA230) (Mitsubishi Chemical Corporation, particle diameter: 30 nm) was used.

<Stability evaluation at kneading temperature>

A paste prepared by mixing the binder pitch of Examples or Comparative Examples and needle coke at 150°C for 5 minutes (needle coke: binder pitch = 3:7, mass ratio) was evaluated as a measurement sample. The measurement sample was measured at 170°C for 1 hour at a shear rate of 10 $s^{-1}$, and the change with time in the viscosity was recorded. MCR72 (Anton Paar GmbH) was used to measure the viscosity. The viscosity increase rate (%) was calculated using formula (3) on the basis of the viscosity at 10 minutes after the start of measurement. When the viscosity increase rate at 60 minutes after the start of measurement is 1.0% or less, it was determined to be stable at the kneading temperature (here, 170°C). When the viscosity increase rate at 60 minutes after the start of measurement is 1.0% or less, it was determined to be "good", and when the viscosity increase rate exceeds 1.0%, it was determined to be "poor". The results are summarized in Table 1. The change with time in the viscosity increase rate is shown in FIG. 2.

$$\text{Viscosity increase rate (\%)} = \frac{\eta_{Xmin} - \eta_{10min}}{\eta_{10min}} \times 100 \qquad (3)$$

$\eta_{10min}$ : viscosity at 10 minutes after start of measurement

$\eta_{Xmin}$ : viscosity at x minutes after start of measurement

<Ethylene bottom oil heavy fraction and light fraction>

Using 894 kg of ethylene bottom oil (5% by mass distillation temperature: 196°C, 90% by mass distillation temperature: 575°C) as a raw material, distillation refinement was carried out at a pot temperature of 101°C and an operating pressure of 533 to 1,067 PaA using distillation equipment having a theoretical plate number of 15 (Sulzer packing) to obtain 544 kg of an ethylene bottom oil heavy fraction as a bottom liquid. The initial boiling point of the obtained ethylene bottom oil heavy fraction was 218°C. The components obtained as distillate were used as the ethylene bottom oil light fraction.

<Method for measuring raw material composition (boiling range)>

The raw material composition (boiling range) of the ethylene bottom oil and the ethylene bottom oil light fraction as the raw material was measured in accordance with the method described in ASTM D7500-15 "Standard Test Method for Determination of Boiling Range Distribution of Distillates and Lubricating Base Oils-in Boiling Range from 100°C to 735°C by Gas Chromatography". AC SIMDIS Analyzer (PAC L.P.) was used for the measurement.

Example 1

3,000 g of the ethylene bottom oil light fraction was introduced into a SUS autoclave with a capacity of 6.0 L. The autoclave was sealed under a nitrogen gas atmosphere, the inside of the vessel was heated to 430°C at a rate of 4°C/min while stirring, and a heat treatment was carried out. After 6 hours had elapsed since the temperature reached 430°C, the product was allowed to cool to room temperature, and the heat-treated product was discharged. The heat-treated product was distilled under reduced pressure using a reduced pressure distillation apparatus to distill off the low boiling point components, whereby 720 g (yield: 24%) of base pitch A was obtained as a high boiling point component. 110.4g of the obtained base pitch A and 9.6 g of the artificial graphite powder were placed in a metal beaker, and heated and mixed at 140°C for 30 minutes in an oil bath using a three-one motor to prepare 120 g of binder pitch, and various evaluations were carried out.

Comparative Example 1

Various evaluations were carried out using the base pitch A obtained in Example 1 as a binder pitch.

Comparative Example 2

114 g of the base pitch A obtained in Example 1 and 6 g of the carbon black powder were placed in a metal beaker, and heated and mixed at 140°C for 30 minutes in an oil bath using a three-one motor to prepare 120 g of binder pitch, and various evaluations were carried out.

Comparative Example 3

550 g of the ethylene bottom oil (5% by mass distillation temperature: 196°C, 90% by mass distillation temperature: 575°C) was introduced into a SUS autoclave with a capacity of 1.0 L. The autoclave was sealed under a nitrogen gas atmosphere, the inside of the vessel was heated to 380°C at a rate of 4°C/min while stirring, and a heat treatment was carried out. After 36 hours had elapsed since the temperature reached 380°C, the product was allowed to cool to room temperature, and the heat-treated product was discharged. The heat-treated product was distilled under reduced pressure using a reduced pressure distillation apparatus to distill off the low boiling point components, whereby 226 g (yield: 41%) of base pitch B was obtained as a high boiling point component. 110.4g of the obtained base pitch B and 9.6 g of the artificial graphite powder were placed in a metal beaker, and heated and mixed at 140°C for 30 minutes in an oil bath using a three-one motor to prepare 120 g of binder pitch, and various evaluations were carried out.

Table 1

| | | | Ex. 1 | Comp. Ex. 1 | Comp. Ex. 2 | Comp. Ex. 3 |
|---|---|---|---|---|---|---|
| Raw material | Type of raw material | | Ethylene bottom oil light fraction | Ethylene bottom oil light fraction | Ethylene bottom oil light fraction | Ethylene bottom oil |
| | Raw material composition/ % by mass (boiling range) | <150°C | 0 | 0 | 0 | 0 |
| | | 150°C≤b. p. <450°C | 100 | 100 | 100 | 71 |
| | | 450°C≤b. p. <550°C | 0 | 0 | 0 | 15 |
| | | 2550°C | 0 | 0 | 0 | 14 |
| Base pitch preparation conditions | Heat treatment conditions | Temperature/ °C | 430 | 430 | 430 | 380 |
| | | Time/ hrs | 6 | 6 | 6 | 36 |
| | Distillation conditions | Distillation end point (in terms of normal pressure)/ °C | 385 | 385 | 385 | 320 |
| Physical properties of base pitch | Softening point/ °C | | 91 | 91 | 91 | 87 |
| | Fixed carbon content/ % by mass | | 51. 1 | 51. 1 | 51.1 | 50.8 |
| | Quinoline insoluble matter/ % by mass | | 0.0 | 0.0 | 0.0 | 0.0 |
| | Initial boiling point/ °C | | 372 | 372 | 372 | 311 |
| Carbon powder addition conditions | Type | | artificial graphite powder | - | carbon black powder | artificial graphite powder |
| | Amount added with respect to 100 parts by mass of base pitch/ parts by mass | | 8.7 | - | 5.3 | 8.7 |

(Continuation of Table 1)

| | | Ex. 1 | Comp. Ex. 1 | Comp. Ex. 2 | Comp. Ex. 3 |
|---|---|---|---|---|---|
| Physical properties of binder pitch | Softening point/ °C | 93 | 91 | 94 | 90 |
| | Fixed carbon content/ % by mass | 55.3 | 51.1 | 53.4 | 54. 2 |
| | Quinol ine insoluble matter/ % by mass | 8.0 | 0.0 | 5.0 | 8.0 |
| | Initial boiling point/ °C | 372 | 372 | 372 | 311 |
| | Casson yield value/ Pa (measurement temperature: softening point + 100°C) | 0.242 | 0.007 | 0.057 | 0.198 |
| | True density/ g· cm$^{-3}$ | 1. 250 | 1.214 | 1.234 | 1.254 |
| | Stability at kneading temperature (170°C) | good | good | good | poor |
| | Viscosity increase rate/ % | <0.1 | 0.3 | <0.1 | 1.4 |
| Electrode evaluation | Formed body density/ g·cm$^{-3}$ | 1.850 | 1.847 | 1.857 | 1. 771 |
| | Carbon yield/ % by mass | 74.1 | 58.4 | 61.4 | 66. 5 |
| | Baked body density/ g·cm$^{-3}$ | 1.616 | 1.548 | 1.584 | 1.587 |

Comparing the Examples with the Comparative Examples, it can be seen that even when the softening point and the fixed carbon content are similar, a remarkably high carbon yield can be obtained when a binder pitch having a Casson yield value of 0.18 Pa or more is used. As described above, this is considered to be due in part to suppression of the outflow of the binder pitch from the formed body during baking. In Comparative Example 3, since the Casson yield value is 0.18 Pa or more, the carbon yield tends to be high. However, since the initial boiling point is low, the viscosity increases during kneading. Therefore, since the kneadability is lowered and the density of the formed body tends to be lowered, the density of the baked body tends to be lowered. From the above, it is clear that in order to obtain a carbon material having a higher density, it is effective to use a binder pitch having an appropriate softening point, fixed carbon content, quinoline insoluble matter, initial boiling point, and Casson yield value at the softening point +100°C.

**Claims**

1. A binder pitch for producing a carbon material, wherein the binder pitch has a softening point of 70°C to 120°C, a fixed carbon content of 50.0% by mass or more, a quinoline insoluble matter of 18.0% by mass or less, an initial boiling point of 320°C or more, and a Casson yield value at the softening point +100°C of 0.18 Pa or more.

2. The binder pitch for producing a carbon material according to claim 1, wherein the carbon material is a graphite electrode.

3. A method for producing a carbon material using pitch having a softening point of 70°C to 120°C, a fixed carbon content of 50.0% by mass or more, a quinoline insoluble matter of 18.0% by mass or less, an initial boiling point of 320°C or more, and a Casson yield value at the softening point +100°C of 0.18 Pa or more, as a binder pitch.

4. The method for producing a carbon material according to claim 3, wherein the carbon material is a graphite electrode.

## Fig.1

PETROLEUM SUCH AS NAPHTHA → THERMAL CRACKING FURNACE → PRE-DISTILLATION SYSTEM → COMPRESSION SYSTEM → DISTILLATION TOWER → OLEFIN / AROMATIC COMPOUND / CRACKED GASOLINE / CRACKED KEROSENE / OTHERS

PRE-DISTILLATION SYSTEM → ETHYLENE BOTTOM OIL

# Fig.2

# Fig.3

# Fig. 4

$$\sqrt{S} = 0.276\sqrt{D} + 0.492$$

# INTERNATIONAL SEARCH REPORT

| International application No. |
|---|
| **PCT/JP2024/015827** |

**A. CLASSIFICATION OF SUBJECT MATTER**

*C08L 95/00*(2006.01)i; *C01B 32/205*(2017.01)i; *C08K 3/04*(2006.01)i; *C10C 3/02*(2006.01)i
FI: C08L95/00; C01B32/205; C08K3/04; C10C3/02 E

According to International Patent Classification (IPC) or to both national classification and IPC

**B. FIELDS SEARCHED**

Minimum documentation searched (classification system followed by classification symbols)

C08L95/00; C01B32/205; C08K3/04; C10C3/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-204546 A (JFE CHEMICAL CORP.) 08 December 2016 (2016-12-08) claims, paragraphs [0001], [0013], [0015], [0018], [0021]-[0024], example 1 | 1-4 |
| X | JP 2017-218486 A (JFE CHEMICAL CORP.) 14 December 2017 (2017-12-14) claims, paragraphs [0001], [0018]-[0020], [0024]-[0026], example 2 | 1-4 |
| X | JP 2013-237747 A (JFE CHEMICAL CORP.) 28 November 2013 (2013-11-28) claims, paragraphs [0001], [0016], [0021]-[0022], [0024]-[0032], examples 3-4 | 1-4 |
| Y | WO 2022/049953 A1 (SHOWA DENKO K.K.) 10 March 2022 (2022-03-10) paragraphs [0016]-[0041], [0047]-[0056], examples 1-2, 4-8, 10 | 1-4 |
| Y | JP 5-279668 A (MITSUBISHI KASEI CORP.) 26 October 1993 (1993-10-26) claim 1, paragraphs [0001], [0010], [0012], example 1 | 1-4 |
| Y | JP 5-279667 A (MITSUBISHI KASEI CORP.) 26 October 1993 (1993-10-26) claim 1, paragraphs [0001], [0012], [0014], example 1 | 1-4 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 May 2024** | **18 June 2024** |

| Name and mailing address of the ISA/JP | Authorized officer |
|---|---|
| **Japan Patent Office (ISA/JP) 3-4-3 Kasumigaseki, Chiyoda-ku, Tokyo 100-8915 Japan** | |
| | Telephone No. |

Form PCT/ISA/210 (second sheet) (July 2022)

**EP 4 741 460 A1**

## INTERNATIONAL SEARCH REPORT

| International application No. |
|---|
| **PCT/JP2024/015827** |

### C. DOCUMENTS CONSIDERED TO BE RELEVANT

| Category* | Citation of document, with indication, where appropriate, of the relevant passages | Relevant to claim No. |
|---|---|---|
| Y | JP 2-258892 A (CONOCO INC.) 19 October 1990 (1990-10-19) <br> claims, p. 3, upper right column, lines 6-13, p. 6, lower right column, lines 6-8 | 1-4 |
| A | JP 56-79190 A (NIPPON CARBON CO., LTD.) 29 June 1981 (1981-06-29) <br> entire text | 1-4 |
| A | JP 5-279669 A (MITSUBISHI KASEI CORP.) 26 October 1993 (1993-10-26) <br> entire text | 1-4 |

Form PCT/ISA/210 (second sheet) (July 2022)

## INTERNATIONAL SEARCH REPORT
### Information on patent family members

International application No.

**PCT/JP2024/015827**

| Patent document cited in search report | | | Publication date (day/month/year) | Patent family member(s) | Publication date (day/month/year) |
|---|---|---|---|---|---|
| JP | 2016-204546 | A | 08 December 2016 | (Family: none) | |
| JP | 2017-218486 | A | 14 December 2017 | (Family: none) | |
| JP | 2013-237747 | A | 28 November 2013 | (Family: none) | |
| WO | 2022/049953 | A1 | 10 March 2022 | US 2023/0303933 A1 paragraphs [0039]-[0069], [0075]-[0091], examples 1-2, 4-8, 10 EP 4209569 A1 CN 116096839 A | |
| JP | 5-279668 | A | 26 October 1993 | (Family: none) | |
| JP | 5-279667 | A | 26 October 1993 | (Family: none) | |
| JP | 2-258892 | A | 19 October 1990 | US 4959139 A claims, column 2, lines 1-12, column 6, lines 49-53 EP 378326 A2 CA 1333374 A | |
| JP | 56-79190 | A | 29 June 1981 | (Family: none) | |
| JP | 5-279669 | A | 26 October 1993 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6352637 B2
- JP S60179493 A
- JP S60240790 A